# EUROPÄISCHE PATENTSCHRIFT

(11) **EP 2 946 256 B1**
(45) Veröffentlichungstag und Bekanntmachung des Hinweises auf die Patenterteilung: **26.04.2017**
(21) Anmeldenummer: 14700212.5
(22) Anmeldetag: 10.01.2014
(51) Int. Cl.: G05B 19/418, G05D 1/02

(54) **ANLAGE, INSBESONDERE FERTIGUNGSANLAGE**
SYSTEM, IN PARTICULAR A PRODUCTION SYSTEM
INSTALLATION, EN PARTICULIER USINE

(30) Priorität: 21.01.2013 DE 102013000851
(43) Veröffentlichungstag der Anmeldung: 25.11.2015
(73) Patentinhaber: Sew-Eurodrive GmbH & Co. KG, 76646 Bruchsal (DE)
(72) Erfinder: SCHMIDT, Josef, 76676 Graben-Neudorf (DE); SLIDKOVIC, Maja, 76275 Ettlingen (DE)
(86) Internationale Anmeldenummer: PCT/EP2014/000044
(87) Internationale Veröffentlichungsnummer: WO 2014/111242

(56) Entgegenhaltungen:
- DE-A1-102004 043 515

## Beschreibung

Die Erfindung betrifft eine Anlage, insbesondere Fertigungsanlage.

Es ist allgemein bekannt, dass eine Anlage, insbesondere Fertigungsanlage, Maschinen aufweist, welche ein Gefahrpotential für Menschen darstellen. Daher werden diese Maschinen in Käfigen vorgesehen, also in Gitterboxen oder dergleichen.

Aus der DE 10 2004 043 515 A1 ist ein Verfahren zum Erfassen eines Objektes bekannt.

Der Erfindung liegt daher die Aufgabe zugrunde, eine Anlage ohne Käfigsicherungen für Maschinen, wie Roboter, oder dergleichen weiterzubilden.

Erfindungsgemäß wird die Aufgabe bei der Anlage nach den in Anspruch 1 angegebenen Merkmalen gelöst.

Wichtige Merkmale der Anlage sind, dass die Anlage, insbesondere Fertigungsanlage, Maschinen aufweist, insbesondere stationär oder verfahrbar angeordnete Maschinen, und zumindest ein Fahrzeug und eine Steuerung,
wobei das Fahrzeug zumindest einen Sensor zur Bestimmung der relativen Position eines Menschen aufweist, insbesondere einen Sensor zur Bestimmung der Entfernung zwischen dem Fahrzeug und dem Menschen sowie zur Bestimmung des Winkels zwischen der Fahrtrichtung des Fahrzeugs und der Verbindungslinie zwischen dem Menschen und dem Fahrzeug,
wobei das Fahrzeug ein Positionserfassungsmittel zur Erfassung der Position des Fahrzeugs aufweist, insbesondere GPS-System oder Triangulationssystem zur Bestimmung der Position des Fahrzeugs,
wobei die Steuerung ein Mittel zur Bestimmung des Sicherheitsraumbereichs um den Menschen herum und der darin angeordneten Maschinen aufweist,
wobei ein Datenübertragungskanal zwischen der Steuerung und den Maschinen angeordnet ist.

Von Vorteil ist dabei, dass keine Käfigabsperrungen oder Gitterboxen notwendig sind und die Maschinen von möglichst vielen Seiten direkt zugänglich sind. Auf diese Weise sind effektivere logistische Verfahren anwendbar. Außerdem ist die Sicherheit nur in dem Sicherheitsraumberiech um den Menschen herum erreicht, indem nur die in diesem Raumbereich sich befindenden Maschinen in den sicherheitsgerichteten Zustand versetzt werden. Sobald der Mensch sich weiterbewegt hat, wandert der gedachte Sicherheitsraumbereich mit und ermöglicht auf diese Weise ein sofortiges Freigeben der aus dem Sicherheitsraumbereich heraustretenden Maschinen.

Bei einer vorteilhaften Ausgestaltung ist das Fahrzeug schienengeführt, insbesondere wobei die Schiene oberhalb des für Menschen vorgesehenen Weges verläuft, oder flächig verfahrbar ist. Von Vorteil ist dabei, dass eine möglichst lückenfreie und einfache Verfolgung des Menschen durch das Fahrzeug ausführbar ist.

Bei einer vorteilhaften Ausgestaltung weist das Fahrzeug einen Lautsprecher und eine Vielzahl von Mikrofonen, insbesondere ein Mikrofon-Array und/oder eine akustische Kamera, auf,
insbesondere wobei das Fahrzeug ein Mittel zur Bestimmung eines Ansteuersignals für den Lautsprecher aufweist, so dass an der Position des Menschen, insbesondere an der Position der Ohren des Menschen, Geräusche unterdrückt werden. Von Vorteil ist dabei, dass nicht nur eine Sicherheitserhöhung sondern auch eine Geräuschunterdrückung für den Menschen erreichbar ist.

Bei einer vorteilhaften Ausgestaltung weist das Fahrzeug eine Tageslichtkamera, eine Infrarot-Kamera, ein Mikrofon und/oder eine Vielzahl von Mikrofonen, insbesondere akustische Kamer oder Mikrofon-Array, auf und eine Auswerteeinheit für die Sensorsignale zur Bestimmung der Position eines Menschen ist am Fahrzeug angeordnet. Von Vorteil ist dabei, dass der Mensch in einfacher Weise erkennbar ist und somit eine schnelle Bestimmung ausführbar ist.

Wichtige Merkmale bei dem Verfahren zum Betreiben einer Anlage sind, dass die Anlage Maschinen aufweist, insbesondere stationär oder verfahrbar angeordnete Maschinen, und zumindest ein Fahrzeug und eine Steuerung,
**wobei** vom Fahrzeug aus die Position eines Menschen bestimmt wird und diejenigen Maschinen, welche in einem Sicherheitsraumberiech um den Menschen herum angeordnet sind, in einen sicherheitsgerichteten Zustand versetzt werden.

Von Vorteil ist dabei, dass die Sicherheit erhöht ist, ohne dass Käfige oder Gitterboxen oder Käfige notwendig sind.

Bei einer vorteilhaften Ausgestaltung wird bei einer jeweiligen, in den sicherheitsgerichteten Zustand versetzten Maschine die Geschwindigkeit einer jeweiligen Maschinenachse der Maschine reduziert, insbesondere wobei die Maschinenachse die Achse eines Antriebsrads, insbesondere Traktionsantriebsrads, der Maschine ist. Von Vorteil ist dabei, dass die Geschwindigkeit derart weit herabsetzbar ist, dass die Gefährdung des Menschen vermindert ist.

Bei einer vorteilhaften Ausgestaltung wird bei Detektion des Menschen durch einen Sensor der jeweiligen Maschine die Geschwindigkeit der Maschinenachsen weiter reduziert. Von Vorteil ist dabei, dass die Sicherheit weiter erhöhbar ist. Insbesondere ist bei einem Traktionsantrieb die Sicherheit derart erhöht, dass ein Auffahren auf den und somit eine Kollision mit dem Menschen verhinderbar ist.

Bei einer vorteilhaften Ausgestaltung wird die Geschwindigkeit, insbesondere Traktionsgeschwindigkeit, einer nicht stationären Maschine derart reduziert, dass der Bremsweg kleiner ist als die Entfernung zum Menschen. Von Vorteil ist dabei, dass ein sicherer Halt rechtzeitig ausführbar ist.

Bei einer vorteilhaften Ausgestaltung wird das Fahrzeug derart angesteuert, dass der Abstand zum Menschen im Wesentlichen konstant gehalten wird oder zumindest der

Abstand auf einen Minimalabstandswert hin geregelt wird. Von Vorteil ist dabei, dass das Fahrzeug dem Menschen folgt und somit eine möglichst fehlerarme Positionsbestimmung des Menschen ausführbar ist.

Bei einer vorteilhaften Ausgestaltung weist das Fahrzeug eine Vielzahl von Mikrofonen auf, so dass die Position von Geräuschquellen bestimmt wird und daraus ein derartiges Ansteuersignal für einen Lautsprecher des Fahrzeugs erzeugt wird, dass das im Bereich der Ohren des Menschen der von Geräuschquellen erzeugte und zu den Ohren des Menschen gelangende Schall verringert wird, also eine vom Fahrzeug eine Geräuschunterdrückung bewirkt wird. Von Vorteil ist dabei, dass durch phasenabhängige Überlagerung eine Geräuschreduzierung für den Menschen erreichbar ist, insbesondere in der ansonsten vollautomatisch betriebenen Fertigungsanlage.

Bei einer vorteilhaften Ausgestaltung weist zur Bestimmung der Position eines Menschen das Fahrzeug eine Tageslichtkamer, eine Infrarot-Kamera, ein Mikrofon und/oder eine Vielzahl von Mikrofonen, insbesondere akustische Kamer oder Mikrofon-Array, auf. Von Vorteil ist dabei, dass einfache Bestimmungsmittel verwendbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Fertigungsanlage nach Stand der Technik schematisch skizziert dargestellt.

In der Figur 2 ist eine erfindungsgemäße Fertigungsanlage mit schienengeführtem Fahrzeug 4 dargestellt.

In der Figur 3 ist eine andere erfindungsgemäße Fertigungsanlage mit einem auf einer Verfahrfläche verfahrbaren Fahrzeug 6.

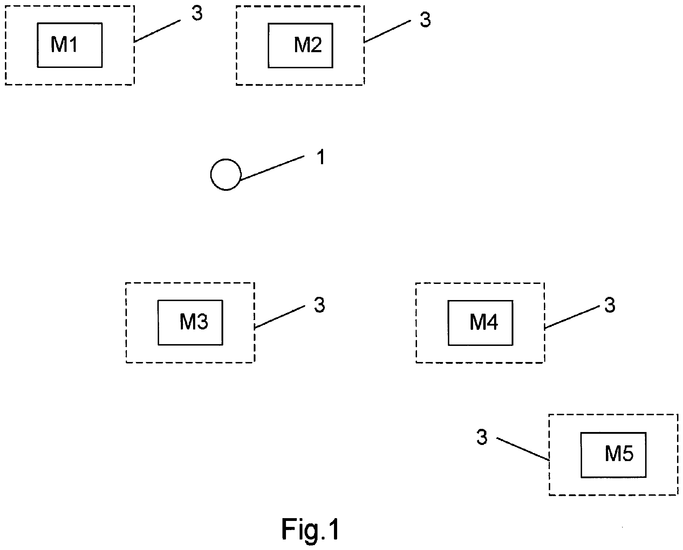

Wie in Figur 1 gezeigt, ist zur Herstellung der Sicherheit für Menschen 1 bekannt, Maschinen (M1, M2, M3, M4, M5) in einem Käfig 1, insbesondere Gitterbox, anzuordnen.

Unter Maschinen werden hierbei nicht nur Werkzeugmaschinen verstanden sondern auch Roboter.

Bei Öffnen einer Tür des Käfigs 3, insbesondere der Gitterbox, wird die entsprechende Maschine, welche innerhalb des Käfigs 3 angeordnet ist abgeschaltet oder in einen anderen sicheren Zustand versetzt. Als sicherer Zustand ist beispielsweise auch ein Herabsetzen der Geschwindigkeiten von Maschinenachsen oder Roboterachsen bekannt.

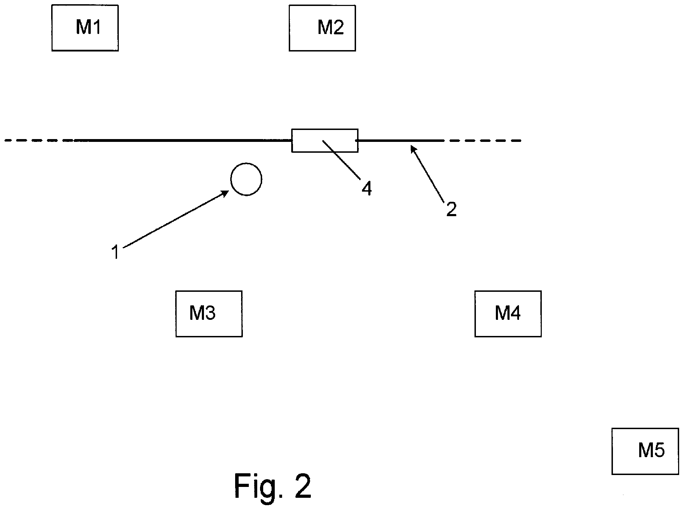

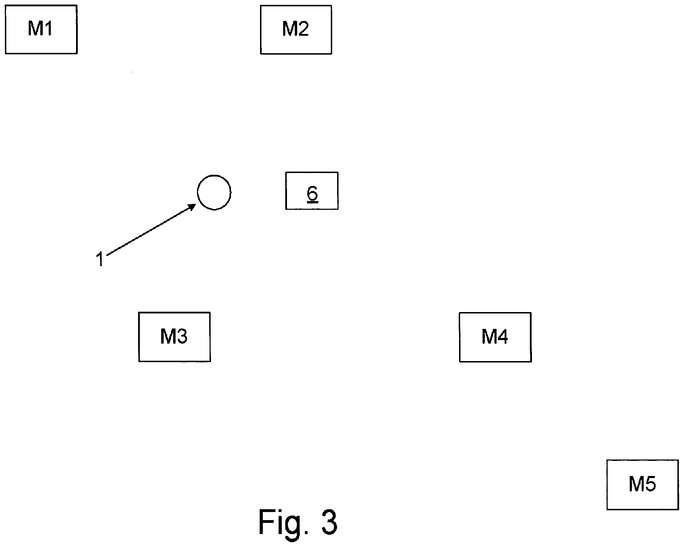

Im Unterschied zum Stand der Technik wird bei der erfindungsgemäßen Anlage nach Figur 2 oder 3 auf die Käfige 3 verzichtet.

Somit ist es einem Menschen 1 ermöglicht, sich frei durch die Anlage zu bewegen und den Maschinen (M1, M2, M3, M4, M5) sich beliebig zu nähern, insbesondere diese zu berühren.

Zur Herstellung der Sicherheit wird die entsprechende Maschine, welche innerhalb eines Sicherheitsraumbereichs um den Menschen 1 herum angeordnet ist abgeschaltet oder in einen anderen sicheren Zustand versetzt. Als sicherer Zustand ist beispielsweise auch ein Herabsetzen der Geschwindigkeiten von Maschinenachsen oder Roboterachsen bekannt. Zur Erkennung des Menschen 1 werden Sensoren eingesetzt, insbesondere Tageslichtkamera, Infrarotkamera, Mikrofon und/oder ein Mikrofon-Array. Durch Auswertung der von den Sensoren erzeugten Signalen, insbesondere durch ein Bilderkennungssystem, wird der Mensch 1 erkannt.

Da die Position der Sensoren bekannt ist, ist auch die Position des Menschen 1 bestimmbar. Somit wird die Position weitergemeldet über einen Datenübertragungskanal, so dass dann diejenigen Maschinen, welche einen Mindestabstand unterschreiten in den sicheren Zustand versetzt werden.

Die Sensoren sind in einem ersten Ausführungsbeispiel stationär angeordnet, beispielsweise an der Decke der Fertigungsanlage oder an einem T-Träger des Gebäudes, so dass ein großer empfindlicher Bereich der Sensoren erreichbar ist.

In einem weiteren Ausführungsbeispiel sind die Sensoren an einem Schienenfahrzeug 4 angeordnet, das entlang einer Schiene 2 bewegbar ist, wie in Figur 2 gezeigt.

In einem weiteren Ausführungsbeispiel sind die Sensoren an einem Fahrzeug 6 angeordnet, das entlang einer Verfahrfläche bewegbar ist, wie in Figur 3 gezeigt.

Bei dieser Verwendung von nicht-stationär, also auf Fahrzeug 6 oder Schienenfahrzeug 4, angeordneten Sensoren gemäß den Figuren 2 oder 3 ist das Fahrzeug (4, 6) möglichst nahe unter Einhaltung eines Mindestabstandes zum Menschen 1 bringbar. Daher ist eine sehr geringe Störanfälligkeit und/oder Fehlerrate erreichbar.

Durch die freie Zugänglichkeit der Maschinen (M1, M2, M3, M4, M5) sind auch fahrerlose Transportsysteme, also FTS, und/oder AGV, also automated guided vehicle, von jeder Richtung heranfahrbar an die jeweilige Maschine (M1, M2, M3, M4, M5). Somit sind die Wege weniger eingeschränkt als im Stand der Technik nach Figur 1.

Die logistischen Abläufe innerhalb der Fertigungsanlage sind daher effektiver gestaltbar.

Zu jeder der Maschinen (M1, M2, M3, M4, M5) werden jeweilige Objekte gebracht und nach Bearbeitung durch die jeweilige Maschine (M1, M2, M3, M4, M5) wiederum Objekte abgeholt.

Das Fahrzeug (4, 6) weist eine Steuerung auf, die mit den Sensoren und/oder deren zugehörigen Auswertemitteln verbunden ist. Außerdem ist die Steuerung jeweils als Busteilnehmer ausgeführt und die Maschinen (M1, M2, M3, M4, M5) mittels ihrer Steuerungen ebenso. Ein Auswertemittel umfasst auch eine Bildauswerteeinheit zur Erkennung eines Menschen 1 oder anderer beweglicher Objekte.

Da die Steuerung des Fahrzeugs eine Liste der Positionen der Maschinen (M1, M2, M3, M4, M5) der Fertigungsanlage in ihrem Speicher abgespeichert hat, werden die im Sicherheitsraumbereich angeordneten Maschinen (M1, M2, M3, M4, M5) von der Steuerung bestimmt und erhalten dann über den als Datenbus ausgeführten Datenbusübertragungskanal einen entsprechenden Befehl, der sie in den sicherheitsgerichteten Zustand versetzt.

Alternativ wird auch nur die Position des Menschen 1 bestimmt und die Steuerungen der Maschinen (M1, M2, M3, M4, M5) bestimmen selbsttätig, ob sie sich im Sicherheitsraumberiech befinden und daher in den sicherheitsgerichteten Zustand gebracht werden müssen oder nicht.

Bei Weiterbewegen des Menschen 1 folgt das Fahrzeug (4, 6) dem Menschen 1, so dass die Erkennung des Menschen auch bei weiter Bewegung stets im Wesentlichen konstant bleibt. Die erfasste Position des Menschen wird zeitlich wiederkehrend aktualisiert, so dass die im aktualisierten Sicherheitsraumbereich befindlichen Maschinen (M1, M2, M3, M4, M5) in den sicherheitsgerichteten Zustand und die außerhalb des Sicherheitsraumbereichs befindlichen Maschinen (M1, M2, M3, M4, M5) in ihren vorgegebenen Arbeitszustand frei gegeben werden.

Das Fahrzeug (4, 6) wiest ein Positionserkennungssystem auf. Dies ist entweder durch in der Fertigungsanlage angeordnete Markierungen erreichbar oder durch ein GPS System. Vorzugsweise sind Sender in der Fertigungsanlage angeordnet, deren Position der Steuerung des Fahrzeugs (4, 6) bekannt ist. Das Fahrzeug bestimmt dann aus den empfangenen Signalen der Sender, insbesondere aus dem Phasenverhältnis der Sender, seine Position. Nach der Bestimmung der Position des Fahrzeugs (4, 6) bestimmt die Steuerung des Fahrzeugs (4, 6) die Position des Menschen 1. Diese Position des Menschen wird entweder über den Datenübertragungskanal über mittelt an die Maschinen (M1, M2, M3, M4, M5) oder es wird zunächst der Sicherheitsraumberiech um die Position des Menschen 1 herum bestimmt und dann den in diesem Sicherheitsraumberiech sich befindenden Maschinen (M1, M2, M3, M4, M5) der Befehl zum Übergehen in den sicherheitsgerichteten Zustand über den Datenübertragungskanal übermittelt.

Als jeweiliger sicherheitsgerichteter Zustand einer der Maschinen (M1, M2, M3, M4, M5) ist eine Reduktion aller Geschwindigkeiten der Maschinenachsen vorgesehen. Außerdem weist jede der Maschinen (M1, M2, M3, M4, M5) zusätzlich zumindest einen Sensor auf, der nach Detektion des Menschen 1 oder Teile desselben die Geschwindigkeit einer entsprechend für den Menschen 1 gefährliche Maschinenachse weiter reduziert. Bei nicht stationär angeordneten Maschinen (M1, M2, M3, M4, M5), wie beispielsweise weitere AGV oder FTS, wird bei Eintreten in den Sicherheitsraumbereich die Geschwindigkeit reduziert und bei Detektion des Menschen 1 durch einen Sensor der nicht stationären Maschine (M1, M2, M3, M4, M5) wird die Geschwindigkeit weiter reduziert. Dabei wird die Geschwindigkeit auf einen derartigen Wert reduziert, dass der Bremsweg kleiner ist als die minimale Entfernung zum Menschen 1.

Die Datenübertragung durch den Datenübertragungskanal ist entweder direkt vom Fahrzeug zu den Maschinen (M1, M2, M3, M4, M5) ausführbar oder indirekt über eine zentrale Steuerung. Diese zentrale Steuerung gibt dann die Geschwindigkeiten der nicht stationär angeordneten Maschinen (M1, M2, M3, M4, M5) oder Fahrzeuge vor.

Bei Ausführung gemäß Figur 2, also mit einem schienengeführten Fahrzeug 4, ist die Schiene 2 vorzugsweise oberhalb des für den Menschen 1 vorgesehenen Weges angeordnet.

Vorzugsweise wird also der Abstand zwischen Fahrzeug (4, 6) und Mensch 1 im Wesentlichen konstant gehalten.

Zusätzlich weist das Fahrzeug (4, 6) ein Mikrofon-Array auf, also eine Vielzahl von Mikrofonen, insbesondere mindestens drei Mikrofone. Somit sind durch Auswertung der empfangenen Signale Geräuschquellen und deren Entfernung bestimmbar. Auf dem Fahrzeug (4, 6) befindet sich auch ein Lautsprecher, der abhängig von den empfangenen Signalen angesteuert wird. Dabei wird das vom Lautsprecher erzeugte Signal derart bestimmt, dass an der Position der Ohren des Menschen 1 die Überlagerung des von den Geräuschquellen zu den Ohren des Menschen 1 gelangenden Schalls und dem von dem Lautsprecher erzeugten Schall eine möglichst kleine Amplitude aufweist. Auf diese Weise ist für den Menschen eine Geräuschunterdrückung Schallquellen, insbesondere determinierbarer Schallquellen, erreichbar. Hierbei wird vorzugsweise eine spektrale Subtraktion verwendet.

Bei einem weiteren erfindungsgemäßen Ausführungsbeispiel ist die Steuerung stationär angeordnet und das Fahrzeug überträgt nur die bestimmten Positionsdaten des Menschen. Die stationär angeordnete Steuerung bestimmt dann den Sicherheitsraumberiech und sendet die Befehle zum Übergang in den sicherheitsgerichteten Zustand an die entsprechenden Maschinen (M1, M2, M3, M4, M5).

Bei einem weiteren erfindungsgemäßen Ausführungsbeispiel wird also bei dem Verfahren zur Erhöhung der Sicherheit der Menschen in einer Fertigungsanlage vorgesehen, dass
- die Maschinen, die eine Gefahrquelle darstellen, insbesondere mittels bewegter Maschinenteile, mit einer Steuerung zum Datenaustausch verbunden sind,
- die Maschinen für Fahrzeuge insbesondere frei zugänglich sind,
- an den Fahrzeugen, also mobilen Einheiten, Sicherheitssensoren angeordnet sind,
- insbesondere jeweils eines der Fahrzeug einem jeweiligen Menschen in der Halle zugeordnet wird zur Bestimmung der Position dieses jeweiligen Menschen,
- die Sicherheitssensoren am Fahrzeug mittels Kommunikationskanal mit der Steuerungseinheit verbunden sind, insbesondere wobei eine periodische Kommunikation ausgeführt wird,
- insbesondere die Sicherheitssensoren optische Sensoren sind,
- die absolute Position des Fahrzeugs, insbesondere des Sicherheitssensors, bestimmt wird,
- die zum jeweils zugeordneten Fahrzeug relative Position des Menschen bestimmt wird, insbesondere mittels 3D-Kamera oder Stereokamera plus Auswerteeinheit,
- anhand der Relativlage eine Gefahr ermittelt wird, insbesondere also die im Sicherheitsraumbereich liegenden relevanten Gefahrenquellen bestimmt werden,
- die Information über Sicherheitsrisiko der Steuerung mitgeteilt wird,
- wonach dann die Steuerung die jeweilige Gefahrenquelle, also jeweilige Maschine, in einen sicheren Zustand versetzt, insbesondere abschaltet oder die Geschwindigkeit reduziert.

### Bezugszeichenliste

- 1: Mensch
- 2: Schiene
- 3: Käfig, insbesondere Gitterbox
- 4: Schienenfahrzeug
- 6: Fahrzeug
- M1: Maschine
- M2: Maschine
- M3: Maschine
- M4: Maschine
- M5: Maschine

## Patentansprüche

1. Anlage, insbesondere Fertigungsanlage,
wobei die Anlage Maschinen aufweist, insbesondere stationär oder verfahrbar angeordnete Maschinen, und zumindest ein Fahrzeug und eine Steuerung,
**dadurch gekennzeichnet, dass**
das Fahrzeug zumindest einen Sensor zur Bestimmung der relativen Position eines Menschen aufweist, insbesondere einen Sensor zur Bestimmung der Entfernung zwischen dem Fahrzeug und dem Menschen sowie zur Bestimmung des Winkels zwischen der Fahrtrichtung des Fahrzeugs und der Verbindungslinie zwischen dem Menschen und dem Fahrzeug,
wobei das Fahrzeug ein Positionserfassungsmittel zur Erfassung der Position des Fahrzeugs aufweist, insbesondere GPS-System oder Triangulationssystem zur Bestimmung der Position des Fahrzeugs,
wobei die Steuerung ein Mittel zur Bestimmung des Sicherheitsraumbereichs um den Menschen herum und der darin angeordneten Maschinen aufweist,
wobei ein Datenübertragungskanal zwischen der Steuerung und den Maschinen angeordnet ist.

2. Anlage nach mindestens einem der vorangegangenen Ansprüche,
**dadurch gekennzeichnet, dass**
das Fahrzeug schienengeführt ist, insbesondere wobei die Schiene oberhalb des für Menschen vorgesehenen Weges verläuft, oder flächig verfahrbar ist.

3. Anlage nach mindestens einem der vorangegangenen Ansprüche,
**dadurch gekennzeichnet, dass**
das Fahrzeug einen Lautsprecher und eine Vielzahl von Mikrofonen, insbesondere ein Mikrofon-Array und/oder eine akustische Kamera, aufweist,
insbesondere wobei das Fahrzeug ein Mittel zur Bestimmung eines Ansteuersignals für den Lautsprecher aufweist, so dass an der Position des Menschen, insbesondere an der Position der Ohren des Menschen, Geräusche unterdrückt werden.

4. Anlage nach mindestens einem der vorangegangenen Ansprüche,
**dadurch gekennzeichnet, dass**
das Fahrzeug eine Tageslichtkamera, eine Infrarot-Kamera, ein Mikrofon und/oder eine Vielzahl von Mikrofonen, insbesondere akustische Kamer oder Mikrofon-Array, aufweist und eine Auswerteeinheit für die Sensorsignale zur Bestimmung der Position eines Menschen am Fahrzeug angeordnet ist..

5. Verfahren zum Betreiben einer Anlage, insbesondere nach mindestens einem der vorangegangenen Ansprüche,
wobei die Anlage Maschinen aufweist, insbesondere stationär oder verfahrbar angeordnete Maschinen, und zumindest ein Fahrzeug und eine Steuerung,
**dadurch gekennzeichnet, dass**
vom Fahrzeug aus die Position eines Menschen bestimmt wird und diejenigen Maschinen, welche in einem Sicherheitsraumberiech um den Menschen herum angeordnet sind, in einen sicherheitsgerichteten Zustand versetzt werden.

6. Verfahren nach mindestens einem der vorangegangenen Ansprüche,
**dadurch gekennzeichnet, dass**
bei einer jeweiligen, in den sicherheitsgerichteten Zustand versetzten Maschine die Geschwindigkeit einer jeweiligen Maschinenachse der Maschine reduziert wird, insbesondere wobei die Maschinenachse die Achse eines Antriebsrads, insbesondere Traktionsantriebsrads, der Maschine ist..

7. Verfahren nach mindestens einem der vorangegangenen Ansprüche,
**dadurch gekennzeichnet, dass**
bei Detektion des Menschen durch einen Sensor der jeweiligen Maschine die Geschwindigkeit der Maschinenachsen weiter reduziert wird.

8. Verfahren nach mindestens einem der vorangegangenen Ansprüche,
**dadurch gekennzeichnet, dass**
die Geschwindigkeit, insbesondere Traktionsgeschwindigkeit, einer nicht stationären Maschine derart reduziert wird, dass der Bremsweg kleiner ist als die Entfernung zum Menschen.

9. Verfahren nach mindestens einem der vorangegangenen Ansprüche,
**dadurch gekennzeichnet, dass**
das Fahrzeug derart angesteuert wird, dass der Abstand zum Menschen im Wesentlichen konstant gehalten wird oder zumindest der Abstand auf einen Minimalabstandswert hin geregelt wird..

10. Verfahren nach mindestens einem der vorangegangenen Ansprüche,
**dadurch gekennzeichnet, dass**
das Fahrzeug eine Vielzahl von Mikrofonen aufweist, so dass die Position von Geräuschquellen bestimmt wird und daraus ein derartiges Ansteuersignal für einen Lautsprecher des Fahrzeugs erzeugt wird, dass das im Bereich der Ohren des Menschen der von Geräuschquellen erzeugte und zu den Ohren des Menschen gelangende Schall verringert wird, also eine vom Fahrzeug eine Geräuschunterdrückung bewirkt wird.

11. Verfahren nach mindestens einem der vorangegangenen Ansprüche,
**dadurch gekennzeichnet, dass**
zur Bestimmung der Position eines Menschen das Fahrzeug eine Tageslichtkamer, eine Infrarot-Kamera, ein Mikrofon und/oder eine Vielzahl von Mikrofonen, insbesondere akustische Kamer oder Mikrofon-Array, aufweist.

12. Verfahren zur Erhöhung der Sicherheit der Menschen in einer Fertigungsanlage, wobei
- die Maschinen, die eine Gefahrquelle darstellen, insbesondere mittels bewegter Maschinenteile, mit einer Steuerung zum Datenaustausch verbunden sind,
- die Maschinen für Fahrzeuge insbesondere frei zugänglich sind,
- an den Fahrzeugen, also mobilen Einheiten, Sicherheitssensoren angeordnet sind,
- insbesondere jeweils eines der Fahrzeug einem jeweiligen Menschen in der Halle zugeordnet wird zur Bestimmung der Position dieses jeweiligen Menschen,
- die Sicherheitssensoren am Fahrzeug mittels Kommunikationskanal mit der Steuerungseinheit verbunden sind, insbesondere wobei eine periodische Kommunikation ausgeführt wird,
- insbesondere die Sicherheitssensoren optische Sensoren sind,
- die absolute Position des Fahrzeugs, insbesondere des Sicherheitssensors, bestimmt wird,
- die zum jeweils zugeordneten Fahrzeug relative Position des Menschen bestimmt wird, insbesondere mittels 3D-Kamera oder Stereokamera plus Auswerteeinheit,
- anhand der Relativlage eine Gefahr ermittelt wird, insbesondere also die im Sicherheitsraumbereich liegenden relevanten Gefahrenquellen bestimmt werden,
- die Information über Sicherheitsrisiko der Steuerung mitgeteilt wird,
- wonach dann die Steuerung die jeweilige Gefahrenquelle, also jeweilige Maschine, in einen sicheren Zustand versetzt, insbesondere abschaltet oder die Geschwindigkeit reduziert.

## Claims

1. A plant, in particular manufacturing plant,
wherein the plant has machines, in particular machines which are arranged to be stationary or mobile, and at least one vehicle and a control means,
**characterised in that**
the vehicle has at least one sensor for determining the relative position of a person, in particular a sensor for determining the distance between the vehicle and the person and also for determining the angle between the direction of travel of the vehicle and the connecting line between the person and the vehicle,
the vehicle having a position detection means for detecting the position of the vehicle, in particular a GPS system or triangulation system for determining the position of the vehicle,
the control means having a means for determining the safety spatial region around the person and the machines arranged therein,
a data transmission channel being arranged between the control means and the machines.

2. A plant according to at least one of the preceding claims,
**characterised in that**
the vehicle is rail-mounted, in particular with the rail running above the path intended for people, or being mobile in planar manner.

3. A plant according to at least one of the preceding claims,
**characterised in that**
the vehicle has a loudspeaker and a plurality of microphones, in particular a microphone array and/or an acoustic camera,
in particular the vehicle having a means for determining a trigger signal for the loudspeaker, so that noises are suppressed at the position of the person, in particular at the position of the ears of the person.

4. A plant according to at least one of the preceding claims,
**characterised in that**
the vehicle has a daylight camera, an infrared camera, a microphone and/or a plurality of microphones, in particular acoustic camera or microphone array, and an evaluation unit for the sensor signals for determining the position of a person is arranged on the vehicle.

5. A method for operating a plant, in particular according to at least one of the preceding claims,
wherein the plant has machines, in particular machines which are arranged to be stationary or mobile, and at least one vehicle and a control means,
**characterised in that**
the position of a person is determined from the vehicle and those machines which are arranged in a safety spatial region around the person are placed in a safety-oriented state.

6. A method according to at least one of the preceding claims,
**characterised in that**
in the case of a respective machine which is placed in the safety-oriented state, the speed of a respective machine axle of the machine is reduced, in particular the machine axle being the axle of a drive wheel, in particular traction drive wheel, of the machine.

7. A method according to at least one of the preceding claims,
**characterised in that**
upon detection of the person by a sensor of the respective machine the speed of the machine axles is further reduced.

8. A method according to at least one of the preceding claims,
**characterised in that**
the speed, in particular traction speed, of a non-stationary machine is reduced such that the stopping distance is shorter than the distance from the person.

9. A method according to at least one of the preceding claims,
**characterised in that**
the vehicle is driven such that the distance from the person is kept substantially constant or at least the distance is controlled towards a minimum distance value.

10. A method according to at least one of the preceding claims,
**characterised in that**
the vehicle has a plurality of microphones, so that the position of noise sources is determined and such a trigger signal for a loudspeaker of the vehicle is generated therefrom that the in the region of the ears of the person the sound which is generated by noise sources and which arrives at the ears of the person is reduced, that is, a noise suppression is brought about by the vehicle.

11. A method according to at least one of the preceding claims,
**characterised in that**
the vehicle has a daylight camera, an infrared camera, a microphone and/or a plurality of microphones, in particular acoustic camera or microphone array, for determining the position of a person.

12. A method for increasing the safety of people in a manufacturing plant, wherein
- the machines which represent a source of danger, in particular by means of moving machine parts, are connected to a control means for data exchange,
- the machines are in particular freely accessible to vehicles,
- safety sensors are arranged on the vehicles, i.e. mobile units,
- in particular one of the vehicle in each case is associated with a respective person in the facility for determining the position of this respective person,
- the safety sensors on the vehicle are connected to the control unit by means of a communication channel, in particular with periodic communication being carried out,
- in particular the safety sensors are optical sensors,
- the absolute position of the vehicle, in particular of the safety sensor, is determined,
- the position of the person relative to the associated vehicle in each case is determined, in particular by means of a 3D-camera or stereo camera plus evaluation unit,
- using the relative position, a danger is ascertained, in particular therefore the relevant sources of danger located in the safety spatial region are determined,
- the information about safety risk is notified to the control means,
- whereafter then the control means places the respective source of danger, i.e. respective machine, in a safe state, in particular switches it off or reduces the speed.

## Revendications

1. Installation, en particulier installation de fabrication,
ladite installation comprenant des machines, notamment des machines à implantation stationnaire ou déplaçable, et au moins un véhicule et une commande,
**caractérisée par le fait que**
le véhicule présente au moins un capteur visant à déterminer l'emplacement relatif d'une personne, en particulier un capteur conçu pour déterminer l'éloignement entre ledit véhicule et ladite personne, ainsi que pour déterminer l'angle entre la direction de déplacement dudit véhicule et la ligne de jonction entre ladite personne et ledit véhicule, lequel véhicule comporte un moyen détecteur d'emplacements, destiné à détecter l'emplacement dudit véhicule, notamment un système GPS ou un système de triangulation affecté à la détermination dudit emplacement du véhicule,
la commande étant pourvue d'un moyen de détermination de la zone spatiale de sécurité entourant ladite personne, et des machines implantées dans ladite zone,
un canal de transmission de données étant interposé entre ladite commande et lesdites machines.

2. Installation selon au moins l'une des revendications précédentes, **caractérisée par le fait que**
le véhicule est guidé par rail, sachant notamment que ledit rail s'étend au-dessus du trajet prévu pour des personnes, ou peut être déplacé sur un support plat.

3. Installation selon au moins l'une des revendications précédentes, **caractérisée par le fait que**
le véhicule comprend un haut-parleur et une multiplicité de microphones, en particulier une rangée de microphones et/ou une caméra acoustique,
sachant notamment que ledit véhicule présente un moyen de détermination d'un signal de pilotage destiné audit haut-parleur, ce qui a pour effet de supprimer des bruits à l'emplacement de la personne, en particulier à l'emplacement des oreilles de ladite personne.

4. Installation selon au moins l'une des revendications précédentes, **caractérisée par le fait que**
le véhicule comprend une caméra à lumière diurne, une caméra à infrarouges, un microphone et/ou une multiplicité de microphones, en particulier une caméra acoustique ou une rangée de microphones, et une unité d'évaluation des signaux de capteurs, en vue de déterminer l'emplacement d'une personne sur ledit véhicule.

5. Procédé dévolu à l'actionnement d'une installation conforme, en particulier, à au moins l'une des revendications précédentes,
ladite installation comprenant des machines, notamment des machines à implantation stationnaire ou déplaçable, et au moins un véhicule et une commande,
**caractérisé par le fait que**
l'emplacement d'une personne est déterminé à partir du véhicule et les machines, qui sont implantées dans une zone spatiale de sécurité entourant ladite personne, sont amenées à un état ciblant la sécurité.

6. Procédé selon au moins l'une des revendications précédentes,
**caractérisé par le fait**
**qu'**en présence d'une machine considérée amenée à l'état ciblant la sécurité, la vitesse d'un axe respectif de ladite machine est réduite, sachant notamment que ledit axe de la machine est l'essieu d'une roue d'entraînement, en particulier d'une roue entraînant ladite machine en mode traction.

7. Procédé selon au moins l'une des revendications précédentes,
**caractérisé par le fait que**
la vitesse des axes de machines est réduite davantage encore dans le cas où la personne est détectée par un capteur de la machine considérée.

8. Procédé selon au moins l'une des revendications précédentes,
**caractérisé par le fait que**
la vitesse, en particulier la vitesse de traction d'une machine non stationnaire, est réduite de façon telle que le trajet de freinage soit inférieur à l'éloignement par rapport à la personne.

9. Procédé selon au moins l'une des revendications précédentes,
**caractérisé par le fait que**
le véhicule est piloté de façon telle que la distance, par rapport à la personne, soit pour l'essentiel maintenue constante ou, pour le moins, que ladite distance soit régulée sur une valeur d'espacement minimale.

10. Procédé selon au moins l'une des revendications précédentes,
**caractérisé par le fait que**
le véhicule présente une multiplicité de microphones, de telle sorte que l'emplacement de sources de bruit soit déterminé et qu'il soit engendré sur cette base, à l'adresse d'un haut-parleur dudit véhicule, un signal de pilotage propre à diminuer, dans la région des oreilles de la personne, le son engendré par des sources de bruit et parvenant auxdites oreilles de la personne, c'est-à-dire à provoquer une suppression de bruits par ledit véhicule.

11. Procédé selon au moins l'une des revendications précédentes,
**caractérisé par le fait que**
le véhicule comprend une caméra à lumière diurne, une caméra à infrarouges, un microphone et/ou une multiplicité de microphones, en particulier une caméra acoustique ou une rangée de microphones, en vue de déterminer l'emplacement d'une personne.

12. Procédé dévolu à l'accroissement de la sécurité des personnes dans une installation de fabrication, dans lequel
- les machines représentant une source de danger sont connectées à une commande, notamment au moyen de parties de machines mises en mouvement, en vue de l'échange de données,
- lesdites machines sont, en particulier, librement accessibles par des véhicules,
- des capteurs de sécurité sont installés sur lesdits véhicules, c'est-à-dire sur des unités mobiles,
- l'un respectif desdits véhicules est notamment associé à une personne considérée, dans la salle, en vue de déterminer l'emplacement de cette personne considérée,
- lesdits capteurs de sécurité sont connectés à l'unité de commande sur ledit véhicule, au moyen d'un canal de communication, une communication périodique étant établie en particulier,
- lesdits capteurs de sécurité étant notamment des capteurs optiques,
- il s'opère une détermination de l'emplacement absolu du véhicule, en particulier du capteur de sécurité,
- une détermination de l'emplacement relatif de la personne, par rapport au véhicule respectivement associé, est opérée notamment au moyen d'une caméra 3D ou d'une caméra stéréo, avec adjonction d'une unité d'évaluation,
- un danger est défini sur la base dudit emplacement relatif, c'est-à-dire qu'il s'opère une détermination des sources de danger pertinentes qui se trouvent dans la zone spatiale de sécurité,
- l'information, relative à un risque affectant la sécurité, est notifiée à la commande,
- après quoi ladite commande amène la source de danger considérée, c'est-à-dire la machine considérée, à un état sécurisé en provoquant notamment sa mise à l'arrêt, ou bien réduit la vitesse.
